# EUROPÄISCHE PATENTSCHRIFT

(11) **EP 0 456 819 B1**
(45) Veröffentlichungstag und Bekanntmachung des Hinweises auf die Patenterteilung: **02.02.1994**
(21) Anmeldenummer: 91901779.8
(22) Anmeldetag: 03.12.1990
(51) Int. Cl.: G01C 11/02, G01B 11/24

(54) **EINRICHTUNG ZUR FOTOGRAMMETRISCHEN VERMESSUNG EINES OBJEKTES**
DEVICE FOR PHOTOGRAMMETRICALLY SURVEYING AN OBJECT
DISPOSITIF DE MESURE PHOTOGRAMMETRIQUE D'OBJETS

(30) Priorität: 01.12.1989 DE 3939691
(43) Veröffentlichungstag der Anmeldung: 21.11.1991
(73) Patentinhaber: Leica AG, CH-9435 Heerbrugg (CH)
(72) Erfinder: WITTWER, Willy, D-3180 Wolfsburg 12 (DE)
(86) Internationale Anmeldenummer: EP9002073
(87) Internationale Veröffentlichungsnummer: WO9109273

(56) Entgegenhaltungen:
- DE-A- 3 811 837
- DE-C- 3 712 958
- ATZ Automobiltechnische Zeitschrfit, Vol. 91, no. 6, June 1989, (Stuttgart, DE), H. Bruhn et al: "Fotogrammetrische Vermessung von Kraftfahrzeugen", pages 341-342, 345-347

## Beschreibung

Die Erfindung betrifft eine Einrichtung gemäß dem Oberbegriff des Patentanspuchs 1, wie sie in ihrer bevorzugten Anwendung, nämlich zur Vermessung von Kraftfahrzeugen, aus der Arbeit "Fotogrammetrische Vermessung von Kraftfahrzeugen" in ATZ 91 (1989) 6 bekannt ist. Die Vermessung des betreffenden Objekts erfolgt bei dieser bekannten Einrichtung so, daß gleichsam aus mehreren Richtungen mittels zumindest zwei, die Sensoren enthaltender Kameras Aufnahmen des Objekts hergestellt werden, die in einem Rechner ausgewertet werden; dieser liefert einen digitalen Datensatz, der die Abmessungen des Objekts genau beschreibt.

Voraussetzung für die Erzielung eines einwandfreien Meßergebnisses ist jedoch, daß die räumliche Lage der Sensoren, d. h. der Kameras, relativ zueinander und relativ zum Objekt, d. h. die sogenannte äußere Orientierung, sowie die Lage der Projektionszentren (Objektive) relativ zu den ihnen zugeordneten Sensoren, die sogenannte innere Orientierung der Meßvorrichtung (Kameras), genau bekannt sind. Dieses Problem der äußeren Orientierung steht besonders dann im Vordergrund, wenn die Sensoren individuell, d. h. unabhängig voneinander, positionierbar sind, wodurch gegenüber einer festen Kopplung der Sensoren eine bessere Anpassung der Abbildungsstrahlengänge an die jeweiligen Objekte möglich ist.

Gemäß dem zitierten Stand der Technik erfolgt die innere und/ oder äußere Orientierung dadurch, daß im Objektraum Bezugssysteme, beispielsweise Maßstäbe, angeordnet sind, die also gleichsam Referenzmuster in definierter räumlicher Absolutlage bilden und mittels der Sensoren abgebildet sowie gespeichert werden. Die gespeicherten Referenzmuster werden dann vom Rechner bei der Auswertung der von den Sensoren gelieferten Bilder des Objekts berücksichtigt.

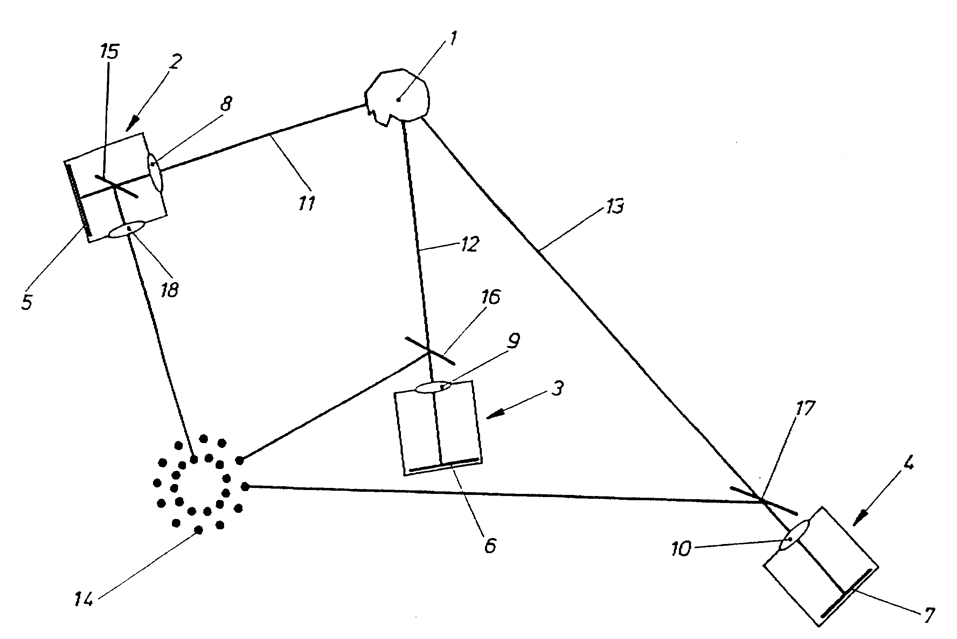

Der Erfindung liegt die Aufgabe zugrunde, eine gattungsgemäße Einrichtung so auszubilden, daß die Positionierung der Sensoren, also letztlich der auch die Projektionszentren enthaltenden Kameras, relativ zum Objekt durch die Abbildung des Referenzmusters nicht beeinträchtigt wird.

Die erfindungsgemäße Lösung dieser Aufgabe besteht in den kennzeichnenden Merkmalen des Patentanspruchs 1, eine vorteilhafte Ausbildung der Erfindung beschreibt der Unteranspruch.

Wesentlich für die Erfindung ist also die Anordnung des Referenzmusters zwar in definierter ortsfester räumlicher Lage, jedoch außerhalb der Abbildungsstrahlengänge der Sensoren, so daß bei der Positionierung der Sensoren relativ zueinander und relativ zum jeweiligen Objekt nicht Rücksicht auf die Unterbringung des Referenzmusters in diesen Strahlengängen genommen werden muß. Die Abbildung des Referenzmusters mittels der Sensoren erfolgt unter Verwendung von optischen Umlenkmitteln, beispielsweise teildurchlässigen Spiegeln oder Prismen in den Abbildungsstrahlengängen der Sensoren. Es ist dann möglich, ein allen Sensoren zugeordnetes Referenzmuster beispielsweise auch relativ weit vom Objekt entfernt anzuordnen und beispielsweise ein Spiegelbild dieses Referenzmusters auf allen Sensoren zu entwerfen. Bei einer direkten Abbildung des Referenzmusters müßte dieses im Bereich des Objekts angeordnet werden, was insbesondere bei kleinen Objekten, deren Gestalt durch die Einrichtung exakt erfaßt werden soll, Schwierigkeiten bietet.

Ein Ausführungsbeispiel der Erfindung wird im folgenden anhand der Zeichnung erläutert, die schematisch eine drei Sensoren enthaltende Einrichtung wiedergibt.

Das zu vermessende Objekt ist mit 1 bezeichnet. Um es herum sind in unterschiedlicher räumlicher Lage drei Kameras 2, 3 und 4 angeordnet, die als wesentliche Bestandteile jeweils einen Sensor 5, 6 und 7 sowie ein Projektionszentrum (Objektiv) 8, 9 und 10 enthalten. Die Abbildungsstrahlengänge der einzelnen Kameras bzw. Sensoren sind mit 11, 12 und 13 bezeichnet. Wie ersichtlich, sind die Kameras 2, 3 und 4 individuell, d.h. unabhängig voneinander, bezüglich des Objekts 1 positionierbar, so daß ihre Lage im Hinblick auf die optimale Vermessung des jeweiligen Objekts gewählt werden kann.

Nicht dargestellt, da hinsichtlich des Aufbaus bekannt, ist ein an die Sensoren 5, 6 und 7 angeschlossenes Datenverarbeitungsgerät zur Auswertung der von den einzelnen Sensoren gelieferten Objektbilder; wie bereits eingangs angeführt, liefert dieses Datenverarbeitungsgerät einen digitalen Datensatz, der die räumliche Form des Objekts beschreibt.

Für eine genaue Vermessung des Objekts 1 ist die exakte Erfassung sowohl der Lage der Objektive 8, 9 und 10 relativ zu den ihnen zugeordneten Sensoren 5, 6 und 7, d. h. die innere Orientierung der Kameras 2, 3 und 4, als auch die räumliche Position der Kameras 2, 3 und 4 relativ zueinander sowie relativ zum Objekt 1 erforderlich. Die Erfassung dieser räumlichen Lagen erfolgt aus Gründen der erforderlichen Genauigkeit nicht auf mechanischem Wege, also beispielsweise mittels Skalen an Verstellvorrichtungen für die Kameras, sondern optisch durch Abbildung des optischen Referenzmusters 14, das sich in einer definierten räumlichen Absolutlage befindet. In diesem Ausführungsbeispiel sind zu diesem Zweck in den Abbildungsstrahlengängen 11, 12 und 13 teildurchlässige Spiegel 15, 16 und 17 (der erste innerhalb der Kamera 2, die beiden anderen außerhalb der ihnen zugeordneten Kamera 3 bzw. 4) angeordnet, die so ausgerichtet sind, daß sie Spiegelbilder des Referenzmusters 14 entsprechend der jeweiligen Lage und Ausrichtung der betreffenden Kamera auf der Sensorfläche derselben entwerfen. Verständlicherweise müssen die Spiegel 15, 16 und 17 eine exakte definierte Lage bezüglich der jeweiligen Sensorfläche 5, 6 und 7 aufweisen, so daß sie fest mit der jeweiligen Kamera 2, 3 und 4 verbunden sind.

Wie bei der Kamera 2 durch die Lage des teildurchlässigen Spiegels 15 angedeutet, braucht dieser nicht gleichsam außerhalb der Kamera, also außerhalb des Abstandes zwischen Objektiv 8 und Objekt 1, zu liegen, sondern kann er auch im Abstand zwischen Sensor 5 und Objektiv 8 angeordnet sein, wobei dann gegebenenfalls ein zusätzliches Objektiv 18 im Kameragehäuse vorgesehen ist. Es besteht dann die Möglichkeit, mit der Kamera 2 sehr nahe an das Objekt 1 heranzugehen.

Mit der Erfindung ist demgemäß eine gattungsgemäße Einrichtung geschaffen, die eine genaue Vermessung unterschiedlicher Objekte gestattet, ohne daß die Positionierbarkeit der Sensoren bezüglich des Objekts beeinträchtigt ist.

## Patentansprüche

1. Einrichtung zur fotogrammetrischen Vermessung eines Objekts, enthaltend zumindest zwei individuell positionierbare optische Sensoren, diesen in definierter räumlicher Relativlage zugeordnete Projektionszentren sowie zumindest ein objektraumseitig in definierter räumlicher Lage angeordnetes optisches Referenzmuster zur Erfassung der Lage der Projektionszentren bezüglich der Sensoren und/oder der Sensoren relativ zueinander und/oder bezüglich des Objekts durch Abbildung des Referenzmusters mittels der Sensoren, **dadurch gekennzeichnet,** daß das Referenzmuster (14) außerhalb der zwischen dem Objekt (1) und den Sensoren (5,6,7) verlaufenden Abbildungsstrahlengänge (11,12,13) angeordnet ist und den Sensoren (5,6,7) optische Umlenkmittel (15,16,17) in definierter Lage bezüglich der Sensoren (5,6,7) zum Abbilden des Referenzmusters (14) zugeordnet sind.

2. Einrichtung nach Anspruch 1, **gekennzeichnet durch** zumindest teildurchlässige Umlenkmittel (15, 16,17) in den Abbildungsstrahlengängen (11,12,13).

## Claims

1. Equipment for the photogrammetric measurement of an object, comprising at least two individually positionable optical sensors, centres of projection associated therewith in defined spatial relative position, as well as at least one optical reference pattern, which is arranged at the side of the object space in defined spatial position, for the detection of the position of the centres of projection with respect to the sensors and/or of the sensors relative to one another and/or with respect to the sensors through imaging of the reference pattern by means of the sensors, characterised thereby, that the reference pattern (14) is arranged outside of the imaging beam paths (11, 12, 13) extending between the object (1) and the sensors (5, 6, 7) and optical deflecting means (15, 16, 17) are associated with the sensors (5, 6, 7) in defined position with respect to the sensors (5, 6, 7) for the imaging of the reference pattern (14).

2. Equipment according to claim 1, characterised by at least partly permeable deflecting means (15, 16, 17) in the imaging beam paths (11, 12, 13).

## Revendications

1. Dispositif de mesure photogrammétrique d'objets, comprenant au moins deux capteurs optiques susceptibles d'être positionnés individuellement, des centres de projection associés à ceux-ci dans des positions relatives définies dans l'espace ainsi qu'au moins un échantillon de référence optique disposé dans une position définie dans l'espace du côté de l'objet pour enregistrer ou saisir la position des centres de projection par rapport aux capteurs et/ou des capteurs les uns par rapport aux autres et/ou par rapport à l'objet par reproduction de l'échantillon de référence au moyen des capteurs, caractérisé en ce que l'échantillon de référence (14) est disposé à l'extérieur des trajets des rayons de reproduction (11,12,13) s'étendant entre l'objet (1) et les capteurs (5,6,7) et qu'aux capteurs (5,6,7) sont associés des moyens de déviation optiques (15,16,17) dans une position définie par rapport aux capteurs (5,6,7) pour la reproduction de l'échantillon de référence (14).

2. Dispositif selon la revendication 1, caractérisé en par des moyens de déviation (15,16,17) au moins partiellement transparents dans les trajets de ravons de reproduction (11,12,13).
